# EUROPEAN PATENT APPLICATION

(11) **EP 4 294 121 A1**
(43) Date of publication of application: **20.12.2023**
(21) Application number: 22752633.2
(22) Date of filing: 01.02.2022
(51) Int. Cl.: H05B 3/20, B60S 1/02

(54) **VEHICULAR WINDOWPANE**

(30) Priority: 15.02.2021 JP 2021022174
(71) Applicant: NIPPON SHEET GLASS COMPANY, LIMITED, Tokyo 108-6321 (JP)
(72) Inventor: SAKAI, Tsuneaki, Tokyo 108-6321 (JP); UETANI, Hisashi, Tokyo 108-6321 (JP)
(74) Representative: Mewburn Ellis LLP
(86) International application number: PCT/JP2022/003762
(87) International publication number: WO 2022/172805

(57) **Abstract**

A vehicle window glass according to the present invention includes: a curved glass plate having a first face and a second face; two bus bars that are formed on the first face and are respectively disposed along any two sides of the glass plate; a plurality of heating wires that are formed on the first face and are arranged in parallel to connect the bus bars to each other; and connection terminals that are respectively disposed on the two bus bars, in which the two bus bars each have a first region where the connection terminal is disposed, and a second region other than the first region, the first region and the second region are connected along the corresponding side, the width of the first region is the same as or smaller than the width of the second region, and a resistance value per unit area of the first region is smaller than a resistance value per unit area of the second region.

## Description

### Technical Field

The present invention relates to a vehicle window glass.

### Background Art

In general, a defogger for defogging is provided on a rear glass of an automobile. A defogger usually includes a pair of bus bars extending along two sides of a rear glass, and a plurality of heating wire extending in parallel to connect the bus bars to each other. Also, a bus bar is provided with a connection terminal for applying a current (e.g., Patent Literatures 1 and 2).

### Citation List

### Patent Literature

Patent Literature 1: JP 2001-347830A
Patent Literature 2: JP 2002-2452A

### Summary of Invention

### Technical Problem

Because a current is intensively applied to a portion of the bus bar where the connection terminal is attached, a large amount of heat is generated. Therefore, the portion where the connection terminal is provided may have a locally high temperature, which may cause a problem such as disconnection of the bus bar or separation of the connection terminal. The present invention was made in order to solve the above problem, and an object thereof is to provide a vehicle window glass capable of inhibiting a portion where a connection terminal is provided from having a locally high temperature.

### Solution to Problem

A vehicle window glass according to the present invention includes: a curved glass plate having a first face and a second face; two bus bars that are formed on the first face and are respectively disposed along any two sides of the glass plate; a plurality of heating wires that are formed on the first face and are arranged in parallel to connect the two bus bars to each other; and connection terminals that are respectively disposed on the two bus bars, in which the two bus bars each have a first region where the connection terminal is disposed and a second region other than the first region, the first region and the second region are connected along the corresponding side, and a resistance value per unit area of the first region is smaller than a resistance value per unit area of the second region.

In the vehicle window glass, the first region may be thicker than the second region.

In the vehicle window glass, the first region and the second region may be formed using different materials, and a resistance value of a material forming the first region may be smaller than a resistance value of a material forming the second region.

In the vehicle window glass, the width of the first region may be substantially the same as or smaller than the width of the second region.

In the vehicle window glass, the first face of the glass plate may constitute a recessed face.

### Advantageous Effects of Invention

With a vehicle window glass according to the present invention, it is possible to inhibit a portion where a connection terminal is provided from having a locally high temperature.

### Brief Description of Drawings

FIG. 1 is a plan view of a vehicle window glass according to an embodiment of the present invention; and
FIG. 2 is a cross-sectional view of a window glass to which a connection terminal is attached.

### Description of Embodiments

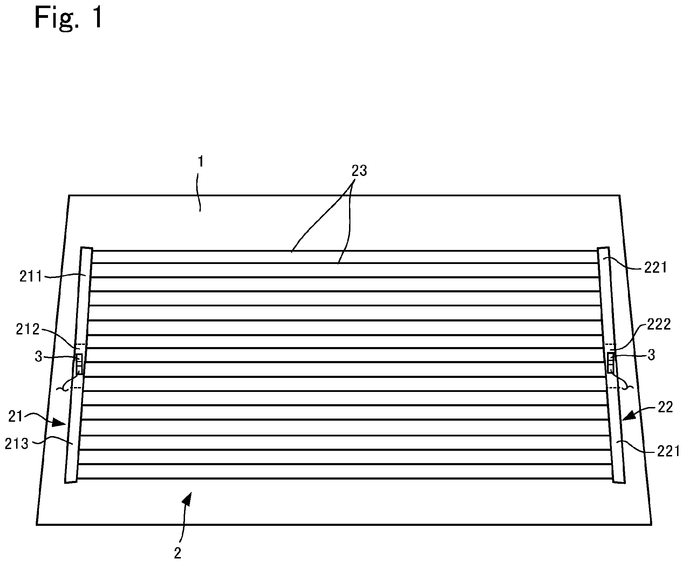

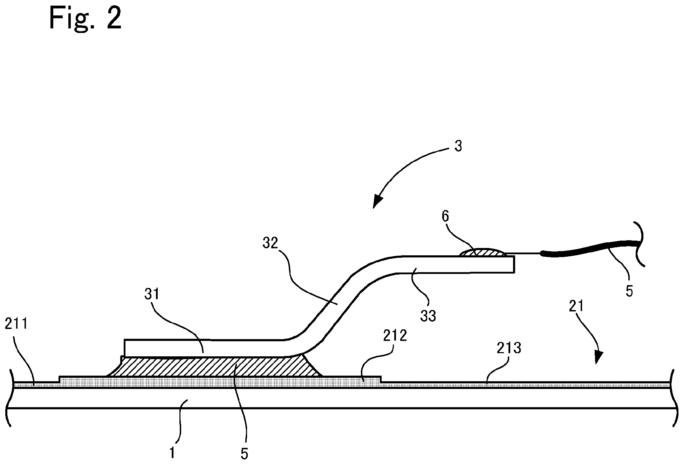

Hereinafter, an embodiment in which a vehicle window glass according to the present invention is applied to a rear glass of an automobile will be described with reference to the drawings. FIG. 1 is a plan view of the vehicle window glass. As shown in FIG. 1, the vehicle window glass includes a glass plate 1 curved to protrude outward of the vehicle, a defogger 2 laminated on a surface of the glass plate 1 on the vehicle interior side, and a pair of connection terminals 3 attached to the defogger 2 using solder 4. A conductive cable 5 (see FIG. 2) extending from the inside of the vehicle is attached to each connection terminal 3, and a current supplied through the conductive cable 5 is supplied to the defogger 2 via the connection terminal 3. Each member will be described below.

### 1. Glass Plate

A glass plate 1 has a rectangular shape, and a known glass plate for automobiles can be used therefor. Heat-ray absorbing glass, regular clear glass or green glass, or UV green glass may also be used for the glass plate 1, for example. However, such a glass plate 1 is required to attain a visible light transmittance that conforms to the safety standards of a country in which the automobile is to be used. An adjustment can be made so that the glass plate 1 provides a required solar absorptance, a visible light transmittance, and the like that meet the safety standards, for example. An example of a composition of clear glass, and an example of a composition of heat-ray absorbing glass are shown below.

### Clear Glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R represents an alkali metal)
Total iron oxide (T-Fe₂O₃) in terms of Fe₂O₃: 0.08 to 0.14 mass%

### Heat-ray absorbing glass

With regard to the composition of heat-ray absorbing glass, a composition obtained based on the composition of clear glass by setting the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the components (mainly SiO₂ and Al₂O₃) forming the framework of glass by an amount corresponding to the increases in T-Fe₂O₃, CeO₂, and TiO₂ can be used, for example.

Note that the type of glass plate 1 is not limited to clear glass or heat-ray absorbing glass, and can be selected as appropriate according to an embodiment.

Also, the thickness of the glass plate 1 according to this embodiment does not need to be particularly limited. However, from the viewpoint of weight reduction, the thickness of the glass plate 1 is preferably 2.2 to 5.1 mm, more preferably 2.4 to 3.8 mm, and particularly preferably 2.7 to 3.2 mm.

Also, such a glass plate 1 may be a single glass plate, or a laminated glass in which an intermediate film such as a resin film is sandwiched by a plurality of plates of glass.

### 2. Defogger

Next, the defogger 2 will be described with reference to FIG. 2. FIG. 2 is a cross-sectional view of a window glass provided with connection terminals. As shown in FIG. 1, the defogger 2 includes a pair of a first bus bar 21 and a second bus bar 22 for power supply that extend in the up-down direction along both side edges of the glass plate 1. Also, between both bus bars 21 and 22, a plurality of heating wires 23 extending in a horizontal direction are disposed in parallel at a predetermined interval.

The later-described connection terminals 3 are respectively disposed in the vicinities of the centers of the bus bars 21 and 22. Also, a current is supplied to the connection terminal 3 attached to the first bus bar 21 via the conductive cable 5, and the connection terminal 3 attached to the second bus bar 22 is grounded via the conductive cable 5. With this configuration, when a current is supplied to the defogger 2, heat for defogging is generated in the heating wires 23.

Here, although the bus bars 21 and 22 will be described in detail with reference to FIG. 2 as well, both bus bars 21 and 22 have substantially the same configuration, and thus, the first bus bar 21 will be described below. As shown in FIGS. 1 and 2, the first bus bar 21 is constituted by connecting three regions such that the three regions are lined up in the up-down direction. Specifically, an upper region (second region) 211, a central region (first region) 212, and a lower region (second region) 213 are lined up from top to bottom. The regions 211 to 213 have substantially the same width, and the length of the central region 213 in the up-down direction is shorter than the length of the upper region 211 and the length of the lower region 213. Also, the central region 212 is thicker than the upper region 211 and the lower region 213. Further, as will be described later, the connection terminal 3 is fixed to the central region 212 by solder.

The thickness of the central region 212 can be an integral multiple of the thickness of the other regions 211 and 213, such as two-fold or three-fold, for example. Specifically, the thickness of the central region 212 is preferably 5 to 100 µm, and more preferably 10 to 30 µm, for example. On the other hand, the thickness of the upper region 211 and the thickness of the lower region 213 are each preferably 3 to 50 µm, and more preferably 5 to 20 µm, for example. The thickness of the upper region 211 and the thickness of the lower region 213 may be the same or different from each other. Also, the thickness of the heating wire 23 is not particularly limited, and may be the same as the thickness of the upper region 211 and the thickness of the lower region 213.

The length of the central region 212 is not particularly limited, and may be 5% to 70%, preferably 10% to 50%, and more preferably 15% to 25% of the total length of the bus bars 21 and 22, for example.

The bus bars 21 and 22 and the heating wires 23 are formed by applying conductive silver paste, copper paste, or aluminum paste to a surface of the glass plate 1 on the vehicle interior side through screen printing or the like, and performing calcination thereon, for example. However, a material forming the defogger 2 is not limited to these materials, and can be selected as appropriate.

### 3. Connection Terminal

Next, the connection terminal 3 will be described. Although the connection terminal 3 attached to the first bus bar 21 will be described below, the connection terminal 3 attached to the second bus bar 22 also has the same configuration.

As shown in FIG. 2, the connection terminal 3 according to this embodiment is integrally formed by bending a conductive material such as a plate-shaped metal, and includes a plate-shaped installation portion 31 where the bus bar 21 or 22 of the defogger 2 is installed, for example. Also, the installation portion 31 has a rectangular shape, and a lower face of the installation portion 31 is fixed to the central region 212 or 222 of the bus bar 21 or 22 via solder 5.

The solder 5 may be either lead-free solder or lead-based solder. When lead-free solder is used, it is possible to use indium-based or bismuth-based lead-free solder, for example.

A plate-shaped rising portion 32, which extends upward obliquely, is integrally connected to a rear end portion of the installation portion 31. The rising portion 32 has a rectangular shape, and rises at an angle of about 30 degrees with respect to the installation portion 31. Note that the angle of the rising portion 32 with respect to the installation portion 31 is not particularly limited, and is preferably 10 to 90 degrees, for example.

A plate-shaped connection portion 33, which extends rearward horizontally, is integrally connected to an upper end portion of the rising portion 32. The connection portion 33 is formed in a rectangular shape in a plan view that is narrower than the installation portion 31, and an end portion of the above-described conductive cable 5 is fixed to the rear end portion of the connection portion 33 using solder or an adhesive member 6 such as a conductive adhesive.

### 4. Method for Producing Window Glass

Next, a method for producing a window glass according to this embodiment will be described. First, the paste for the defogger 2 described above is printed on one surface of the glass plate 1 formed in a flat plate shape. At this time, paste is printed on the central regions 212 and 222 of the bus bars 21 and 22 twice or more times, so that the central regions 212 and 222 are thicker than the upper regions 211 and 221 and the lower regions 213 and 223. Then, the glass plate 1 is conveyed into a heating furnace, the glass plate 1 is heated to a temperature around a softening point thereof, and the paste printed on the glass plate 1 is calcined to form the defogger 2. The glass plate 1 conveyed from the heating furnace is then pressed such that the glass plate 1 is curved into a desired shape. At this time, the surface where the defogger 2 is formed becomes a recessed face. Subsequently, the glass plate 1 is annealed, the connection terminals 3 are respectively attached to the bus bars 21 and 22, thus completing a window glass according to this embodiment. Note that there is no particular limitation on a method for forming the glass plate 1, and the glass plate can be formed through a self-weight bending method in which the glass plate 1 is bent under its own weight, or the like, in addition to press-molding described above.

### 5. Features

As described above, with the window glass according to this embodiment, it is possible to obtain the following effects.
(1) Because a current is intensively applied to the central regions 212 and 222 of the bus bars 21 and 22 where the connection terminals 3 are disposed, these regions may have a locally high temperature. To address this, the thickness of the central regions 212 and 222 where the connection terminals 3 are disposed is increased in this embodiment, thus reducing the resistance values per unit area of these regions 212 and 222. Therefore, even when a current is intensively applied, it is possible to reduce heat generated, and thus to inhibit the central regions from having a locally high temperature. When the defogger 2 is formed using silver (electrical resistivity: 1.6×10⁻⁸ Ω•m), the width of the defogger is 30 mm, and the thickness of the central regions 212 and 222 is about 20 µ, for example, the resistance values per unit area of the central regions 212 and 222 are about 1.5 Ω/m² (the resistance value per bus bar unit length is approximately 0.45 Ω/dm), and the heating value per unit area is 114 W/m². On the other hand, when the thickness of the upper regions 211 and 221 and the lower regions 213 and 223 is about 10 µ, the resistance value per unit area of these regions is about 2.0 Ω/m² (the resistance value per bus bar unit length is about 0.90 Ω/dm), and the heating value per unit area is 152 W/m². Therefore, the heating value per unit area of the central regions 212 and 222 can be made smaller than that of the other regions, and a locally high temperature can be suppressed.
(2) Because a metal forming the bus bars 21 and 22, such as silver, has higher heat reflectance than the glass plate 1, the bus bars are less likely to be heated compared to the glass plate 1 when the bus bars are heated in a heating furnace. Therefore, when the bus bars are annealed, a difference in contraction occurs between the bus bars 21 and 22 and the glass plate 1, and the glass plate 1 may be distorted in the vicinities of the bus bars 21 and 22, which may cause optical distortion. To address this, it is conceivable to increase the width of the regions of the bus bars 21 and 22 where the connection terminals 3 are provided, but this results in an increase in the regions where optical distortion occurs. In view of this, the width of the central regions 212 and 222 are the substantially the same as the width of the upper regions 211 and 221 and the lower regions 213 and 223 in the window glass according to this embodiment, and thus the regions where optical distortion occurs can be reduced in size. Note that, although the central regions 212 and 222 may be wider than the other regions, even in such a case, making the central regions 212 and 222 thicker than the other regions can minimize the width of the central regions 212 and 222 even when the central regions 212 and 222 are widened. Therefore, optical distortion can be suppressed.

In particular, if a surface where the defogger 2 is formed is heated during press-molding, the difference in contraction between the glass plate 1 and the defogger 2 increases, and the above-described optical distortion tends to occur. Therefore, the configurations of the bus bars 21 and 22 as in this embodiment are particularly advantageous in such a case.

### 6. Variations

Although an embodiment of the present invention has been described above, the present invention is not limited to the above embodiment, and various changes can be made without departing from the gist of the invention. Also, the following variations can be combined as appropriate.

### 6-1

Although the width of the central regions 212 and 222 is the same as the width of the upper regions 211 and 221 and the lower regions 213 and 223 in the above embodiments, they do not need to be exactly the same, and the central regions 212 and 222 can be slightly wider than the upper regions 211 and 221 and the lower regions 213 and 223. Further, the central regions 212 and 222 can be narrower than the upper regions 211 and 221 and the lower regions 213 and 223.

### 6-2

Although the central regions 212 and 222 are thicker than the upper regions 211 and 221 and the lower regions 213 and 223 in order to reduce the resistance value per unit area of the central regions 212 and 222 in the above embodiment, a method for reducing the resistance value per unit area of the central regions 212 and 222 is not limited to this. A material used for the central regions 212 and 222 may differ from a material used for the upper regions 211 and 221 and the lower regions 213 and 223, for example. That is, the resistance value of the material forming the central regions 212 and 222 can be smaller than the resistance value of the material forming the upper regions 211 and 221 and the lower regions 213 and 223. It is possible to form the central regions 212 and 222 using silver or copper, and form the upper regions 211 and 221 and the lower regions 213 and 223 using a material such as aluminum or zinc, which has higher electrical resistivity than silver or copper, for example.

Although the overall thickness of the central regions 212 and 222 to which the connection terminals 3 are attached are larger than the thickness of the upper regions 211 and 221 and the lower regions 213 and 223 in the above embodiment, the overall thickness of the central regions 212 and 222 does not need to be made larger than the thickness of the upper regions 211 and 221 and the lower regions 213 and 223, and it is sufficient that the resistance value per unit area of the central regions 212 and 222 is reduced as a result of increasing only the thickness of portions to which the connection terminals 3 are attached, for example.

### 6-3

There is no particular limitation on the positions of regions of the bus bars 21 and 22 where the connection terminals 3 are provided. In the above embodiment, the regions 212 and 222 where the connection terminals 3 are provided are formed between the upper regions 211 and 221 and the lower regions 213 and 223, but a configuration may be adopted in which the bus bars 21 and 22 are divided into multiple regions, one of which is the first region of the present invention where the connection terminal 3 is provided, where the resistance per unit area of the first region is smaller than that of the other regions, for example.

### 6-4

The configuration of the connection terminal 3 of the above embodiment is merely an example, and various configurations are possible as long as a current can be applied to the bus bars 21 and 22. Also, there is no particular limitation on a method for supplying a current to the connection terminal 3, and a connector to which a conductive cable is connected or the like can also be fixed to the connection terminal 3, for example.

### 6-5

In the above embodiment, an example was shown in which the vehicle window glass according to the present invention is applied to the rear glass of a vehicle, but this vehicle window glass can also be applied to a side glass. In this case, there is no particular limitation on a side where a bus bar is provided, and it is sufficient that bus bars are disposed on any two sides of a side glass, and a plurality of heating wires are arranged in parallel to connect the bus bars to each other.

### List of Reference Numerals

- 1: Glass plate
- 21, 22: Bus bar
- 211, 221: Upper region (second region)
- 212, 222: Central region (first region)
- 213, 223: Lower region (second region)

## Claims

1. A vehicle window glass comprising:
a curved glass plate having a first face and a second face;
two bus bars that are formed on the first face and are respectively disposed along any two sides of the glass plate;
a plurality of heating wires that are formed on the first face and are arranged in parallel to connect the two bus bars to each other; and
connection terminals that are respectively disposed on the two bus bars,
wherein the two bus bars each have a first region where the connection terminal is disposed, and a second region other than the first region,
the first region and the second region are connected along the corresponding side, and
a resistance value per unit area of the first region is smaller than a resistance value per unit area of the second region.

2. The vehicle window glass according to claim 1,
wherein the first region is thicker than the second region.

3. The vehicle window glass according to claim 1,
wherein the first region and the second region are formed using different materials, and
a resistance value of a material forming the first region is smaller than a resistance value of a material forming the second region.

4. The vehicle window glass according to any one of claims 1 to 3,
wherein the width of the first region is substantially the same as or smaller than the width of the second region.

5. The vehicle window glass according to any one of claims 1 to 4,
wherein the first face of the glass plate constitutes a recessed face.
